# EUROPEAN PATENT APPLICATION

(11) **EP 4 512 246 A1**
(43) Date of publication of application: **26.02.2025**
(21) Application number: 23192957.1
(22) Date of filing: 23.08.2023
(51) Int. Cl.: A01N 25/02, A01N 39/04, A01N 57/20, A01P 13/00

(54) **HERBICIDAL FORMULATIONS**

(71) Applicant: Syngenta Crop Protection AG, 4058 Basel (CH)
(72) Inventor: The designation of the inventor has not yet been filed
(74) Representative: SYNGENTA IP

(57) **Abstract**

A glyphosate concentrate formulation comprising a solution in water of glyphosate ions and base, the base being present in an amount of above 100% to 150% based on mole equivalents of glyphosate acid, the base comprising a mixture of potassium hydroxide and ethanolamine in a mole ratio of 0:100 to 15:85. Also a tank mix formulation of this concentrate with 2,4-D and a method of controlling weeds using the tank mix formulation.

## Description

### Field

The present invention relates to aqueous formulations comprising a salt of glyphosate, and to methods of using such formulations to control unwanted weeds.

### Background

N-(phosphonomethyl)glycine, further referred to herein by its as Glyphosate, is a well-known herbicide used to inhibit the growth of unwanted plants, such as grasses and weeds. Briefly, glyphosate is a non-selective systemic herbicide that prevents the synthesis of essential amino acids. Glyphosate is commonly used in the form of a salt, for example, potassium, trimethylsulphonium, isopropylamine, sodium, ammonium, diammonium, dimethylamine and triethanolamine.

Glyphosate is often sold as concentrated salt formulations configured to be diluted for application. For example, Zapp QI^{®} herbicide (commercially available from Syngenta) is a commercial preparation of glyphosate in its potassium salt form, containing 500 grams of glyphosate (acid equivalent) per liter of water. Zapp QI^{®} herbicide is typically diluted in water to create a concentration suitable for application. Herbicidal application rates, in terms of the glyphosate acid equivalent may vary depending on, for example, species, age, stress, time of year, crop rotation, biotype, etc., but common rates are from 500 to 2000g a.e./ha.. Generally, while many different salts of glyphosate are known, potassium salts provide better rainfastness and improved performance under adverse conditions as compared to pure amine salts. Some examples of glyphosate formulations comprising mixed potassium and amine salts are for instance disclosed in WO-A-0313241. For some of these, an increase in effectiveness has been claimed in this publication.

The use and importance of glyphosate has increased in recent years because a variety of crop plants have been genetically transformed or selected to exhibit resistance to glyphosate. For example, glyphosate tolerant corn, glyphosate tolerant cotton and glyphosate tolerant soybeans may be treated with glyphosate with little risk of crop damage, resulting in increased yields due to decreased weed competition.

Despite such benefits, one problem associated with the increased use of glyphosate is the development of glyphosate resistant weeds. Glyphosate resistant weeds can develop through natural selection in the field, as biotypes exhibiting some level of resistance outcompete herbicide-susceptible biotypes. Herbicide resistance is conferred to subsequent generations, where it may undergo additional selective pressure. The result is a weed population that can survive otherwise lethal doses of herbicide and negatively impact crop yield. One way to reduce the development and spread of glyphosate resistant weeds is to administer at least one other herbicide in addition to glyphosate to inhibit the glyphosate resistant weeds.

Yet further, mixes of two or more herbicides are commonly prepared by the grower in a process known as tank mixing. In tank mixing, typically, two or more concentrated formulations are dissolved, emulsified and/or suspended in a larger volume of water. It is this larger, more dilute mixture that the farmer applies to the field in order to control the weeds. One tank mix useful, for example, for treating or preventing glyphosate resistant weeds is prepared by tank mixing Zapp QI^{®} herbicide with a herbicide containing dimethyl ammonium (2,4-dichlorophenoxy) acetate, also known as 2,4-D methylammonium salt. Various salts of 2,4-D are used to make a number of commercially available herbicides such as DMA^{®} 806 herbicide from Dow AgroSciences (now Corteva) which contains the dimethylammonium salt. 2,4-D is a widely used systemic herbicide which is able to control most broadleaf weeds, whereas grasses such as cereals, lawn turf, and grassland usually remain relatively unaffected.

In addition to being useful for controlling and preventing resistant weed biotypes, herbicidal mixes are also useful for treating wild type weeds, for example, when a variety of different weeds are growing together or when trying to reduce the application rates of specific active ingredients. Mixing, however, is sometimes problematic.

For example, even in dilute tank mixes, compatibility between potassium glyphosate and other herbicides is sometimes difficult to achieve. This is particularly the case when mixing potassium glyphosate with salts of 2,4-D. Although tank mixes are generally used by the farmer fairly soon after mixing, there are instances where the tank mix can be left standing for several hours or even a day. For example if there is an unexpected period of rain after the tank mix has been made, spraying may need to be postponed or interrupted until the rain has passed otherwise the herbicide will be rapidly wash off the plants and have no effect in killing the weeds. It is therefore important that the tank mix is substantially stable over such a period.

Incompatibility or instability of the tank mix can take the form of crystallization of one of the components which can result in blocking of the spray nozzles when the tank mix is applied to the field. This is a serious practical problem which can delay the application process while pipes, pumps and/or nozzles are changed or unblocked. Even more, crystallized herbicides may no longer be fully and predictably biologically available, leading to an effective loss of active herbicidal activity due the incompatibility, and hence adversely affecting the biological performance.

Various embodiments of the invention are directed to various combinations of these, and additional, problems.

It has now been discovered that the compatibility of a potassium glyphosate formulation with a 2,4-D salt formulation in a tank mix can unexpectedly be improved by replacing some of the potassium ions in the glyphosate formulation with an amine selected from one or more of ethanolamine, diethanolamine, triethanolamine or propanolamine. Formulations of the instant invention are thus useful as glyphosate products having improved tank mix stability with 2,4-D. It has also been discovered that a further improvement in compatibility can be made by increasing the amount of total base, i.e. potassium ions plus amine, in the composition.

The compositions also have the further benefit of having a lower amine volatility than other known glyphosate salts.

According to the present invention there is provided a glyphosate concentrate formulation comprising a solution in water of glyphosate acid anions and base, the base being present in an amount of above 100% to 150% based on mole equivalents of glyphosate acid, the base comprising a mixture of potassium hydroxide and an amine selected from ethanolamine, diethanolamine, triethanolamine and/or propanolamine in a mole ratio of 0:100 to 15:85.

Preferably the concentrate formulation comprises 400 to 600g/l of glyphosate acid, more preferably 450 to 550g/l.

Preferably the base is present in an amount of 105 to 140% based on mole equivalents of glyphosate acid, more preferably 110% to 130%, most preferably 110% to 115%, especially 112%.

Preferably the mole ratio of potassium hydroxide and amine is 5:95 to 15:85, most preferably around 10:90.

Preferably the composition contains substantially no additional base, for example less than 5 mol % preferably less than 3% based on total mole equivalents of glyphosate.

The present invention also provides a tank mix composition of the glyphosate concentrate formulation defined above and a salt of 2,4-D diluted in water.

Some preformed compositions comprising specific glyphosate amine salts and 2,4-D amine salts have been disclosed in EP-A-2421372. However, it is noted that these compositions lack potassium ions, and are hence typically not as stable vis-à-vis oxidation or other degradations as compared to the potassium salts or simple 2,4-D ammonium salts. Furthermore, due to the specific formation requirements, stable mixtures are not easily available for direct preparation by a farmer.

Preferably the tank mix comprises 5 to 75g/l, more preferably 10 to 50g/l, even more preferably 20-40g/l of the equivalent of glyphosate acid, based on weight of glyphosate acid, and 2 to 40g/l, more preferably 5 to 30g/l, even more preferably 10 to 25g/l of the salt of 2,4-D based on the weight of 2,4-D acid.

Preferably the salt of 2,4-D is the dimethylammonium salt. The salt of 2,4-D can be any commercial formulation of salts of 2,4-D available, a good example of which is DMA 806 which is the dimethylammonium salt of 2,4-D from the Corteva.

The present invention also provides a method of controlling weeds which comprises contacting the weeds with a tank mix composition as defined above. Preferably the tank mix composition is applied at a rate of 10 to 200 l/ha, more preferably 50 to 150 l/ha.

The formulations of the present invention may contain additional surfactants and adjuvants to increase stability of the concentrated glyphosate formulation and/or increase efficacy of the applied tank-mix product. Surfactants and adjuvants suitable for use in the present invention include those known in the art, for example, anionic surfactants such as alkybenzene sulfonates, alkyl naphthalene sulfonates, alcohol sulfonates, ether sulfates, alkyl sulfosuccinates, polycarboxylates, olefin sulfonates, phosphate ethoxylates, tristyrylphenol phosphates and sulfates and taurates; non-ionic surfactants such as polyglycerols and their derivatives, alkylphenol ethoxylates, tristyrylphenol ethoxylates, alcohol ethoxylates, alkyl ester ethoxylates, aliphatic acid ethoxylates, sorbitan esters and ethoxylates, castor oil ethoxylates, amine ethoxylates, polymeric surfactants, for example block copolymers and comb/graft copolymers, organosilicones and cetylenic diols; cationic surfactants such as quaternary ammonium compounds, amine salts, amine oxides and amine ethoxylates; and amphoteric surfactants.

Due to the properties of glyphosate solutions in water such as high electrolyte environment giving rise to 'salting out' of many adjuvants, only a very few chemicals can be used as built-in adjuvants for the concentrated glyphosate formulations of the invention. The main difficulty is to find a adjuvant that can be soluble in such media and among others, the most preferred ones are one or more of amine ethoxylates, amine oxides, alkylpolyglucosides, and betaines. Particularly preferred adjuvants for use in the compositions of the present invention include alkyl polyglycosides and amine ethoxylates. Alkyl polyglycosides (APG) suitable for use in the present invention have formula (I):

R₁O(R₂O)_{b}(Z)ₐ (I)

R₁ is straight or branched chain alkyl or alkenyl group having from about 4 to about 30 carbon atoms. R₁ is typically a straight or branched chain C₄₋₂₂ alkyl or alkenyl group, more typically a C₈₋₁₁ alkyl group. R₂ is an alkylene having from about 2 to about 4 carbon atoms. R₂ is typically ethylene or propylene, more typically ethylene. b is 0 to about 100. b is typically 0 to about 12, more typically 0. Z is a saccharide residue having about 5 to about 6 carbon atoms. Z may be glucose, mannose, fructose, galactose, talose, gulose, altrose, allose, apiose, gallose, idose, ribose, arabinose, xylose, lyxose, or a mixture thereof. Z is typically glucose. 'a' is an integer from 1 to about 6, typically from 1 to about 3, more typically from 1 to about 2.

Typical compounds of formula (I) are compounds of formula (II): 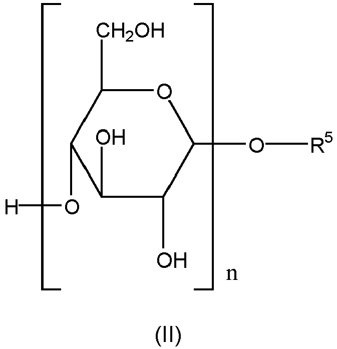 where n is the degree of polymerization and is from 1 to 3, preferably 1 or 2, and R⁵ is a branched or straight chain alkyl group having from 4 to 18 carbon atoms or a mixture of alkyl groups having from 4 to 18 carbon atoms. Most typically, the alkyl polyglycoside comprises an alkyl group containing 8-10 carbon atoms and has an average degree of polymerization of 1.7; an alkyl group containing 9-11 carbon atoms and has an average degree of polymerization of 1.3 to 1.6; or a mixture thereof. APG also includes embodiments, such as those described above, which have been anionically or cationically modified.

Exemplary alkyl polyglycosides include APG^{®} 325 (Cognis Corporation, Cincinnati, OH) (an alkyl polyglycoside in which the alkyl group contains 9 to 11 carbon atoms and has an average degree of polymerization of 1.6), PLANTAREN^{®} 2000 (Cognis Corporation, Cincinnati, OH) (an alkyl polyglycoside in which the alkyl group contains 8 to 16 carbon atoms and has an average degree of polymerization of 1.4), PLANTAREN^{®} 1300 (Cognis Corporation, Cincinnati, OH) (an alkyl polyglycoside in which the alkyl group contains 12 to 16 carbon atoms and has an average degree of polymerization of 1.6), AGNIQUE^{®} PG 8107 (BASF Corporation) (an alkyl polyglycoside in which the alkyl group contains 8 to 10 carbon atoms and has an average degree of polymerization of 1.7), AGNIQUE^{®} PG 9116 (BASF Corporation) (an alkyl polyglycoside in which the alkyl group contains 9 to 11 carbon atoms and has an average degree of polymerization of 1.6) and AGNIQUE^{®} PG 8105 (BASF Corporation) (an alkyl polyglycoside in which the alkyl group contains 8 to 10 carbon atoms and has an average degree of polymerization of 1.5).

Formulations of the invention may also include, by weight / volume %, about 1% to about 15% of a hydrotrope, e.g., salts of xylene sulphonic acid, salts of cumene sulphonic acid or salts of toluene sulphonic acid. Typically, the hydrotrope will be sodium xylene sulphonate (SXS). In some embodiments, hydrotropes may be desirable to further increase concentration loading. Additionally, hydrotropes may also be desirable for lowering viscosity for improved handling, dilution, and application.

Formulations of the invention may also include other inert additives. Such additives include thickeners, flow enhancers, wetting agents, antifoaming agents, biocides, buffers, lubricants, fillers, drift control agents, deposition enhancers, adjuvants, evaporation retardants, freeze protecting agents, insect attracting odor agents, stabilizing metal salts or hydroxides, UV protecting agents, fragrances, and the like. The thickener may be a compound that is soluble or able to swell in water, such as, for example, polysaccharides of xanthans (e.g., anionic heteropolysaccharides), alginates, guars or celluloses such as RHODOPOL^{®} 23 (Xanthan Gum) (Solvay SA); synthetic macromolecules, such as polyethylene glycols, polyvinyl pyrrolidones, polyvinyl alcohols, polycarboxylates, bentonites, montmorillonites, hectonites, or attapulgites. The freeze protecting agent may be, for example, ethylene glycol, propylene glycol, glycerol, diethylene glycol, saccharose, water-soluble salts such as sodium chloride, sorbitol, triethylene glycol, tetraethylene glycol, urea, or mixtures thereof. Representative antifoam agents are silica, polydialkylsiloxanes, in particular polydimethylsiloxanes, fluoroaliphatic esters or perfluoroalkylphosphonic/perfluoroalkylphosphonic acids or the salts thereof and mixtures thereof. Preferred are polydimethylsiloxanes, such as Dow Corning^{®} acp-1000 or Antifoam B. Representative biocides include 1,2-benzisothiazolin-3-one, available as PROXEL^{®} GXL (Arxada AG).

Other embodiments of the invention include storage and shipping systems. Typical storage and shipping systems comprise a container ranging in capacity from about 0.1 L to about 200 L and a compatibilized aqueous herbicidal pesticidal formulation located in the container. Typically, the formulation will be concentrated. The container may include the standard 2.5 gallon (9.46 L) containers widely used in the United States, which typically take the form of jugs or flasks with a replaceable screw-cap. These containers are generally designed for single use and are typically not returned to the supplier when empty, instead being disposed of by the end user in accordance with local agricultural chemical container disposal guidelines, procedures, regulations or laws. Commonly, a plurality of these small containers are packaged within a single box and a plurality of such boxes are shipped on a pallet. During shipment, the small containers (usually within boxes on pallets) can be disposed in an enclosed volume such as provided by a rail boxcar or road truck, the hold of a ship or aircraft, or a modular box container adapted for transport by road, rail and water. Larger single-use containers, ranging in capacity up to about 200 liters, for example about 50 to about 200 liters, are commonly in the form of drums, and can be shipped in an enclosed volume as described above, one or more per pallet or unpalleted.

### Formulations

Formulations of the invention also can be distributed in a large refillable container sometimes known as a bulk or minibulk tank, which typically has an integral pump or connector for an extemal pump to permit transfer of liquid. Bulk or minibulk tanks having a capacity of about 200 to about 2000 liters or more are typically returned to the supplier when empty and are commonly shipped on a pallet.

Formulations according to the invention may be used for pre-emergence application or post-emergence application.

Other embodiments of the invention include methods of inhibiting the growth of an unwanted plant. Examples of unwanted plants include monocot and dicot weeds, including velvetleaf, pigweed, giant ragweed, common lambsquarters, ivyleaf morningglory, annual grasses, etc. The term plant refers to all physical parts of a plant, including seeds, seedlings, saplings, roots, tubers, stems, stalks, foliage and fruits.

Methods of the present invention are suitable especially for combating and/or preventing unwanted plants among crops of useful plants. Methods of the invention are also suitable combating and/or preventing unwanted plants physically distinct from crops or crop areas, e.g., non-crop lands, along unplanted roadsides or under power lines.

Preferred crops of useful plants include cotton, dry beans, snap beans and soybeans.

Crops are to be understood as also including those crops which have been rendered tolerant to herbicides or classes of herbicides (e.g. ALS-, GS-, EPSPS-, PPO-, ACCase, Auxin- and HPPD-inhibitors) by conventional methods of breeding or by genetic engineering. An example of a crop that has been rendered tolerant to imidazolinones, e.g. imazamox, by conventional methods of breeding is Clearfield^{®} summer rape (canola)(BASF). Examples of crops that have been rendered tolerant to herbicides by genetic engineering methods include e.g. glyphosate- and glufosinate-tolerant maize varieties commercially available under the trade names RoundupReady^{®} (Monsanto) and LibertyLink^{®} (Bayer Crop Science). When the compositions of the present invention are used post-emergent over crops, the crops will typically be selected from those crops tolerant, either by genetic engineering methods, artificial selection, or naturally, to the herbicides present in the compositions.

Crops are also to be understood as being those that have been rendered resistant to harmful insects by genetic engineering methods, for example Bt maize (resistant to European corn borer), Bt cotton (resistant to cotton boll weevil) and also Bt potatoes (resistant to Colorado beetle). Examples of Bt maize are the Bt 176 maize hybrids of NK^{®} (Syngenta Seeds). The Bt toxin is a protein that is formed naturally by *Bacillus thuringiensis* soil bacteria. Examples of toxins, or transgenic plants able to synthesize such toxins, are described in EP-A-451 878, EP-A-374 753, WO 93/07278, WO 95/34656, WO 03/052073 and EP-A-427 529. Plant crops or seed material thereof can be both resistant to herbicides and, at the same time, resistant to insect feeding ("stacked" transgenic events). For example, seed can have the ability to express an insecticidal Cry3 protein while at the same time being tolerant to glyphosate.

Crops are also to be understood to include those which are obtained by conventional methods of breeding or genetic engineering and contain so-called output traits (e.g. improved storage stability, higher nutritional value and improved flavor).

Other useful plants include turf grass for example in golf-courses, lawns, parks and roadsides, or grown commercially for sod, and ornamental plants such as flowers or bushes.

Crop areas are areas of land on which the cultivated plants are already growing or in which the seeds of those cultivated plants have been sown, and also areas of land on which it is intended to grow those cultivated plants.

In one embodiment, the method includes applying a formulation as described herein to the plant.

In another embodiment, the method includes diluting the formulation in a volume of water prior to application. The amount of water needed to form dilutions is ascertainable to one of ordinary skill in the art, being dependent on, for example, the initial formulation concentration and the desired application concentration and volume. Dilutions will most typically be performed to create concentrations sufficient to inhibit plant growth. The application rate will depend upon the particular type of pests to be controlled, the degree of control required, and the timing and method of application.

Application may be by any of the variety of ways known to those skilled in the art. Typically, application will be by spraying.

The improvements in compatibility obtained by the compositions of the present invention are further illustrated in the examples below.

### EXAMPLES

In order that those skilled in the art will be better able to practice the invention, the following examples are given by way of illustration and not by way of limitation. In the following examples, as well as elsewhere in the specification and claims, temperatures are in degrees Celsius, the pressure is atmospheric and all parts are by weight / volume percent acid equivalent, unless otherwise clearly indicated.

The formulations in Table 1 were made in an initial attempt to improve the compatibility in a tank mix solution of a commercial glyphosate formulation ZAPP QI, from Syngenta with a commercial 2,4-D formulation DMA 806 from Corteva.

**Table 1**

| Material | Zapp QI | A | B | C | D | E | F | G | H |
|---|---|---|---|---|---|---|---|---|---|
| Glyphosate acid | 500 | 500 | 500 | 500 | 500 | 500 | 500 | 500 | 500 |
| KOH (50% aqueous solution) | 371.6 | 142. 0 | 371.6 | 74.3 | 37.2 | 0 | 0 | 37.2 | 37.2 |
| Ethanolamine | 0 | 125 | 125 | 161.9 | 182.2 | 202 | 220 | 182.2 | 182.2 |
| Tallow amine ethoxylate (Surfom CS 5015) | 120 | 120 | 120 | 120 | 120 | 120 | 120 | - | - |
| Amine Oxide (Ammonyx MO) | - | - | - | - | - | - | - | 90 | 60 |
| Silicone oil | 0.3 | 0.3 | 0.3 | 0.3 | 0.3 | 0.3 | 0.3 | 0.3 | 0.3 |
| Propyleneglycol | - | - | - | - | - | - | - | - | 20 |
| water | up to 1 liter | up to 1 liter | up to 1 liter | up to 1 liter | up to 1 liter | up to 1 liter | up to 1 liter | up to 1 liter | up to 1 liter |
| base/ Gly mol ratio | 1.12 | 1.12 | 1,81 | 1,12 | 1,12 | 1,12 | 1,22 | 2,22 | 3,22 |

| RESULTS | | | | | | | | | |
|---|---|---|---|---|---|---|---|---|---|
| Phase separation after 1 hour @ 25°C | NO | NO | YES 2 phases | NO | NO | NO | NO | YES 2 phases | YES 2 phases |
| DMA 806 compatible* | FAIL | FAIL | Yes | FAIL | Yes | Yes | Yes | FAIL | FAIL |
| *tank mix equivalent to Gly acid 50g/l + 2,4-D acid 20g/l | | | | | | | | | |

In the formulations of Table 1: Glyphosate acid is the active ingredient; KOH is to partially neutralize the glyphosate; Ethanolamine is to partially neutralise the glyphosate acid; Tallow amine ethoxylate (Surfom CS 5015) and Amine Oxide (Ammonyx MO) are adjuvants; Silicone oil is an antifoaming agent; Propylene glycol is a compatibilizer; and water is the main solvent.

As can be seen, it is only within a tight range of composition components that is possible to find homogenous Glyphosate formulations that are compatible with 2,4-D.

Zapp QI comprises an aqueous solution of glyphosate acid and potassium hydroxide. The mol ratio of potassium hydroxide to glyphosate acid was 1.12. It also comprised a surfactant, Surfom SC5015, from Oxiteno which is an alkyl amine ethoxylate together with a small amount of a conventional silicone oil antifoam agent. ZappQl was not compatible with 2,4-D at tank mix concentrations, showing signs of crystallisation after only 1 hour.

Composition A is similar to ZAPP but has ethanolamine added to replace some of the potassium hydroxide. The overall amount of base in A is the same at 1.12 mols of base per mol of glyphosate and the mol ratio between potassium hydroxide and ethanolamine is 27:63. Composition A was not compatible with 2,4-D at tank mix concentrations, showing signs of crystallisation after only 1 hour.

Composition B was similar to ZAPP QI but with the addition of ethanolamine. The overall amount of base in B is higher at 1.81 mols of base per mol of glyphosate and the mol ratio between potassium hydroxide and ethanolamine is 27:63. Composition B was not compatible with 2,4-D at tank mix concentrations, showing signs of separation into 2 phases after storage at 54°C for only 1 hour.

Composition C is similar to A but with a higher ratio of ethanolamine to potassium hydroxide of 80:20. Composition C was not compatible with 2,4-D at tank mix concentrations, showing signs of crystallisation after only 1 hour.

Composition D was similar to composition C but with a higher ratio of ethanolamine to potassium hydroxide of 90:10. Composition D was compatible with 2,4-D at tank mix concentrations and remained a single-phase composition.

Composition E was similar to composition C but with using only ethanolamine as a base, using 1.11 moles based on mols of glyphosate acid. Composition E was compatible with 2,4-D at tank mix concentrations and remained a single-phase composition.

Composition F was similar to composition E but using a higher amount of ethanolamine as a base in an amount of 1.22 moles based on mols of glyphosate acid. Composition F was compatible with 2,4-D at tank mix concentrations and remained a single-phase composition.

Compositions G and H, are similar to Composition D but TAE was replaced by an amine oxide, a well-known as an adjuvant for glyphosate formulations. Such replacement not only led to a heterogenous formulation, but also incompatibility results with 2,4-D were seen.

These results show that adding ethanolamine to a potassium glyphosate formulation can give improved compatibility with 2,4-D if the ratio of ethanolamine to potassium hydroxide is above 80:20, thereby keeping the formulation homogeneity and high Active Ingredient content. Such formulations may advantageously comprise an amount of potassium hydroxide to ethanolamine, diethanolamine, triethanolamine or propanolamine in a mole ratio of 0:100 to 15:85, which offer both stability as such, and in combination with 2,4D-amine salts.

## Claims

1. A glyphosate concentrate formulation comprising a solution in water of glyphosate ions and base, the base being present in an amount of above 100% to 150% based on mole equivalents of glyphosate acid, the base comprising a mixture of potassium hydroxide and an amine selected from the group consisting of ethanolamine, diethanolamine, triethanolamine or propanolamine in a mole ratio of 0:100 to 15:85.

2. The formulation of claim 1, comprising 400 to 600g/l of glyphosate acid.

3. The formulation of claim 2, comprising 450 to 550g/l of glyphosate acid.

4. The formulation of claim 1 in which the base is present in an amount of 105 to 140% based on mole equivalents of glyphosate acid.

5. The formulation of claim 4 in which the base is present in an amount of 110 to 115% based on mole equivalents of glyphosate acid.

6. The formulation of claim 1 in which the amine is ethanolamine.

7. The formulation of claim 1 in which the mole ratio of potassium hydroxide and amine is 5:95 to 15:85.

8. The formulation of claim 1 in which the mole ratio of potassium hydroxide and amine is around 10:90.

9. A tank mix composition of the glyphosate concentrate formulation as claimed in claim 1 and a dimethyl ammonium (2,4-dichlorophenoxy) acetic acid salt diluted in water.

10. The tank mix composition of claim 9 comprising of from 5 to 75g/l of glyphosate acid equivalent, based on weight of glyphosate acid, and 2 to 40g/l of the salt of 2,4-D, based on the weight of 2,4-D acid.

11. The tank mix composition of claim 9 in which the salt of 2,4-D is the dimethylammonium salt.

12. A method of controlling weeds which comprises contacting the weeds with a tank mix composition according to claim 9.

13. The method of claim 1 in which the tank mix composition is applied at a rate of 10 to 200 l/ha.
